(19) **Europäisches Patentamt**
**European Patent Office**
**Office européen des brevets**

(11) **EP 1 464 482 B1**

(12) **EUROPEAN PATENT SPECIFICATION**

(45) Date of publication and mention
of the grant of the patent:
**15.09.2010 Bulletin 2010/37**

(51) Int Cl.:
***B32B 27/18*** (2006.01)

(21) Application number: **02786183.0**

(22) Date of filing: **20.12.2002**

(86) International application number:
**PCT/JP2002/013388**

(87) International publication number:
**WO 2003/055680 (10.07.2003 Gazette 2003/28)**

(54) **MULTILAYER STRUCTURE SUPERIOR IN GAS BARRIER PROPERTY**

MEHRSCHICHTKONSTRUKTION MIT GUTEM GASSPERRVERMÖGEN

STRUCTURE MULTICOUCHE PRESENTANT DES PROPRIETES SUPERIEURES DE BARRIERE AUX GAZ

(84) Designated Contracting States:
**AT BE BG CH CY CZ DE DK EE ES FI FR GB GR IE IT LI LU MC NL PT SE SI SK TR**

(30) Priority: **25.12.2001 JP 2001392301**
          **19.06.2002 JP 2002178022**
          **19.11.2002 JP 2002335315**

(43) Date of publication of application:
**06.10.2004 Bulletin 2004/41**

(73) Proprietor: **Toyo Seikan Kaisha, Ltd.**
**Tokyo 100-0011 (JP)**

(72) Inventors:
• **GOTO, Hiroaki,**
**Toyo Seikan Group Corp. Res.**
**Yokohama-shi, Kanagawa 240-0062 (JP)**

• **ISHIHARA, Takayuki,**
**Toyo Seikan Group Corp. Res.**
**Yokohama-shi, Kanagawa 240-0062 (JP)**
• **MURAKAMI, Shigenobu,**
**Toyo Seikan Group Corp. Res.**
**Yokohama-shi, Kanagawa 240-0062 (JP)**

(74) Representative: **Brookes Batchellor LLP**
**102-108 Clerkenwell Road**
**London**
**EC1M 5SA (GB)**

(56) References cited:
**EP-A- 1 033 080     EP-A- 1 067 154**
**EP-A- 1 184 418     EP-A- 1 213 326**
**EP-A- 1 253 171     WO-A-01/83318**
**WO-A-02/18496     WO-A-02/072350**
**WO-A-02/072695     WO-A-03/051994**
**JP-A- 2001 040 226     JP-A- 2002 088 328**

**Description**

BACKGROUND OF THE INVENTION

(Field of the Invention)

The present invention relates to a multi-layer structure equipped with a gas barrier member having excellent resistance against wet heated conditions and, particularly, excellent oxygen-blocking property under highly humid conditions.

(Description of the Related Art)

As packaging containers, there have heretofore been used metal cans, glass bottles and a variety of plastic containers accompanied, however, by such problems as degeneration of the content and drop of flavor due to oxygen remaining in the container or due to oxygen that enters permeating through the container walls.

In the case of the metal cans and glass bottles, no oxygen permeates through the container walls and a problem stems from only oxygen remaining in the container. In the case of the plastic containers, on the other hand, oxygen permeates through the container walls to a degree that is no longer negligible arousing a problem from the standpoint of preserving the content.

To prevent this problem, the container wall is formed in a multi-layer structure in the case of the plastic containers, and at least one layer among them is formed of a resin having oxygen-blocking property, such as an ethylene/vinyl alcohol copolymer.

In order to remove oxygen in the container, a deoxidizing agent has long been used. An example of using the deoxidizing agent in the container wall has been taught in Japanese Examined Patent Publication (Kokoku) No. 1824/1987 according to which a multi-layer structure for packaging is obtained by laminating a layer having an oxygen gas shut-off property on a layer formed by blending an oxygen-permeable resin with a deoxidizing agent comprising chiefly a reducing material such as iron powder.

Japanese Unexamined Patent Publication No. 278344/1989 proposed by the present inventors discloses a plastic multi-layer container of a laminated structure comprising layers of a humidity-resistant thermoplastic resin provided on both sides of an intermediate layer of a resin composition obtained by blending a gas-barrier thermoplastic resin having an oxygen permeation coefficient at 20°C and 0%RH of not larger than $7.5 \times 10^{-16} cm^3 \cdot cm/cm^2/sec/Pa$ ($10^{-12}$ cc $\cdot$ cm/cm$^2$/sec/cmHg) and a water-absorbing amount at 20°C and 100%RH of not smaller than 0.5% with an organic metal complex of a transition metal.

International Patent Publication No. 500846/1990 discloses a barrier wall for wrapping containing a composition of a polymer having oxygen-trapping property or containing a layer of the above composition, the composition trapping oxygen by catalytically oxidizing the oxidizable organic components with a metal catalyst. As the oxidizable organic components, there have been disclosed a polyamide and, particularly, a xylylene group-containing polyamide.

EP 1033080 and EP 1067154 describe an ethylene/vinyl alcohol copolymer and a thermoplastic resin having a carbon-carbon double bond as gas-barrier layers in the manufacture of biaxially stretch-blow-formed bottles.

A resin having excellent gas barrier property, such as an ethylene/vinyl alcohol copolymer (EVOH) exhibits very excellent oxygen shut-off property under low-humidity conditions accompanied, however, by such a problem that oxygen permeability becomes very great under high-humidity conditions.

In order to improve the content-preserving property, on the other hand, the gas barrier resin is, in many cases, used in combination with a heat-sterilizing packaging method, such as hot-water sterilization, boil sterilization or retort sterilization. During the heat-sterilization, however, the ethylene/vinyl alcohol copolymer (EVOH) is placed under high-humidity conditions not only permitting oxygen to permeate through to a large extent but also being placed in an oxygen-permeating condition even after the sterilization due to water-retaining property of the EVOH, making it difficult to obtain a desired gas barrier property.

The high gas barrier property possessed by the ethylene/vinyl alcohol copolymer is due to a high degree of hydrogen coupling possessed by this copolymer. However, the barrier effect due to the hydrogen coupling based on the hydroxyl group tends to be loosened under a condition where the water content (humidity) is acting to a high degree. This property is of an essential nature and cannot be easily improved.

(SUMMARY OF THE INVENTION)

The present inventors have discovered the fact that the oxygen permeation coefficient of the multi-layer structure can be markedly improved under the wet and heated condition yet maintaining excellent workability and mechanical strength if a gas barrier layer is formed by blending a particular gas barrier resin with a transition metal catalyst and an oxidizable organic component, and if the dispersion structure and the profile structure of the oxidizable organic component are controlled to lie within particular ranges in cross section of the gas barrier layer in the direction of thickness.

It is therefore an object of the present invention to provide a multi-layer structure with a gas barrier layer of which the oxygen permeation coefficient under a wet and heated condition is suppressed to be of a low value while maintaining excellent workability and mechanical strength.

According to the present invention, there is provided a multi-layer structure as claimed in claim 1

In the multi-layer structure of the present invention, it is desired that:

1. when the direction of thickness of said gas barrier layer is regarded to be a short axis and a direction perpendicular to the direction of thickness is regarded to be a long axis in cross section of said gas barrier layer in the direction of thickness thereof, a maximum value of an aspect ratio of dispersed particles of said oxidizable organic component represented by the length in the long axis direction/length in the short axis direction, is not smaller than 2;

2. said oxidizable rganic component is a polyene polymer;

3. said oxidizable organic component is a resin having a functional group:

4. said oxidizable organic component is a resin having a carboxylic acid group or a carboxylic anhydride group.

(BRIEF DESCRIPTION OF THE DRAWINGS)

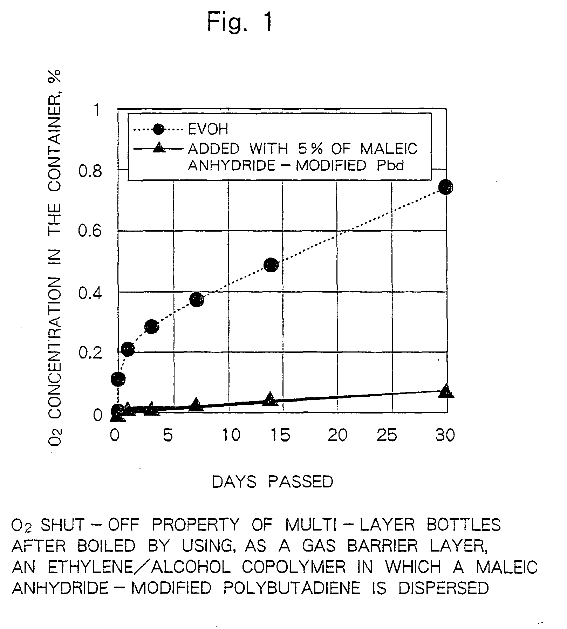

Fig. 1 is a graph plotting a relationship between the days that have passed and an increase (%) in the amount of oxygen in the container when a bottle having a multi-layer structure of propylene/gas barrier layer (20 to 25 $\mu$m thick)/polypropylene is boiled and is, then, aged at 30° C (100%RH inside the bottle and 80%RH outside the bottle);

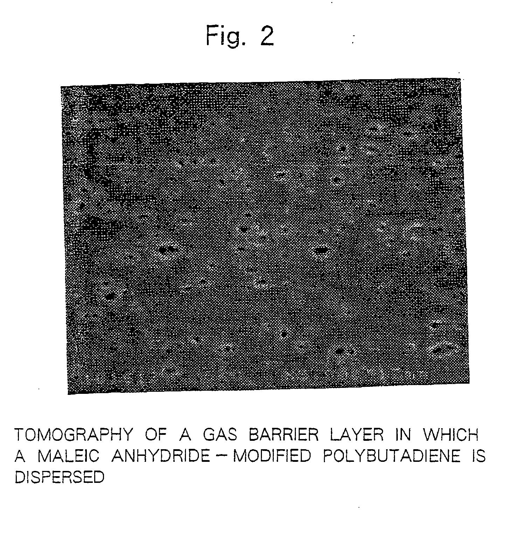

Fig. 2 is a scanning-type electron microphotograph of a gas barrier layer having dispersion and profile structures in cross section in the direction of thickness according to the present invention, the continuous phase being an ethylene/vinyl alcohol copolymer and the dispersion phase being a maleic acid-modified polybutadiene;

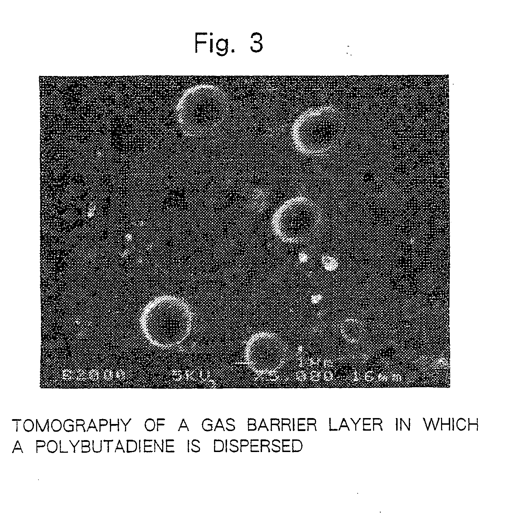

Fig. 3 is a scanning-type electron microphotograph of another gas barrier layer having dispersion and profile structures in cross section in the direction of thickness falling outside the scope of the present invention, the continuous phase being an ethylene/vinyl alcohol copolymer and the dispersion phase being a polybutadiene;

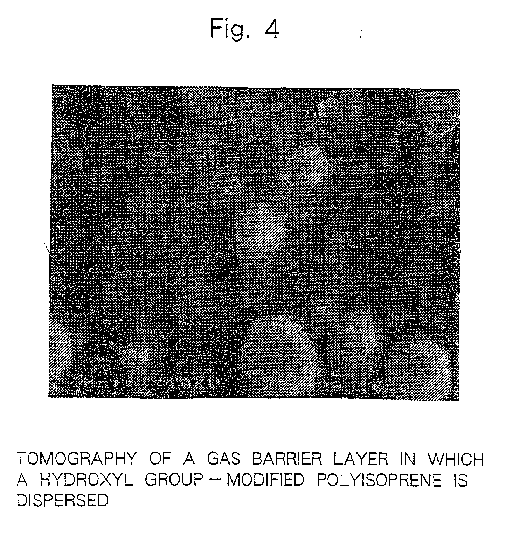

Fig. 4 is a scanning-type electron microphotograph of a further gas barrier layer having dispersion and profile structures in cross section in the direction of thickness falling outside the scope of the present invention, the continuous phase being an ethylene/vinyl alcohol copolymer and the dispersion phase being an OH-modified polyisoprene; and

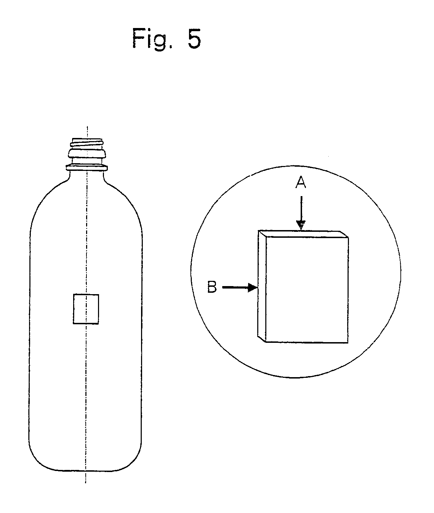

Fig. 5 is a diagram illustrating the gas barrier layer of the present invention in cross section in the direction of thickness.

(EMBODIMENTS OF THE INVENTION)

[Action]

A multi-layer structure having a gas barrier layer of the present invention has a feature in that a gas barrier layer is formed of a resin composition obtained by selecting a thermoplastic resin having an oxygen permeation coefficient at 20° C and 0%RH of not larger than 7.5 x $10^{-16}$ $cm^3 \cdot cm/cm^2/sec/Pa$ ($10^{-12}$ cc $\cdot$ cm/cm$^2$/sec/cmHg) as a base resin and blending it with a transition metal catalyst and an oxidizable organic component, and that the dispersion structure and the profile structure of the oxidizable organic component are controlled to lie within particular ranges in cross section of the gas barrier layer in the direction of thickness thereof.

The thermoplastic resin used in the present invention serves as a chief component, i.e., serves as a matrix of the gas barrier resin composition. The thermoplastic resin having an oxygen permeation coefficient within the above-mentioned range exhibits excellent gas shut-off property.

The invention further uses an oxidizable organic component. The oxidizable organic component exhibits the action of absorbing oxygen as it is oxidized by the action of a transition metal catalyst that will be described later.

It is considered that the oxidizable organic component easily pulls out a hydrogen atom at a position of an active carbon atom in the resin to thereby generate a radical. The composition containing the transition metal catalyst and the oxidizable organic component absorbs oxygen through the oxidation of the organic component, as a matter of course. It is believed that the oxidation occurs through the reactions, i.e., (1) generation of radicals as the hydrogen atoms are pulled out from the carbon atoms by the transition metal catalyst, (2) generation of peroxy radicals as oxygen molecules are added to the radicals, and (3) pulling out of hydrogen atoms by peroxy radicals.

In the gas barrier resin composition used in the present invention as described above, the gas barrier thermoplastic resin plays the role of shutting off the gas without being substantially oxidized. The oxidizable organic component, on the other hand, plays the role of absorbing oxygen by oxidation. Thus, the gas shut-off property and the oxygen absorbing property are exhibited as separate functions creating a distinguished feature.

As described already, if once put to the wet and heated condition, the gas barrier resin such as ethylene/vinyl alcohol copolymer loses the gas barrier property to a large extent. On the other hand, the gas barrier layer having a fine dispersion structure and a multi-layer profile structure obtained by blending the ethylene/vinyl alcohol copolymer with a transition metal catalyst and an oxidizable organic component, exhibits an unexpected effect of maintaining the oxygen permeation coefficient on an excellent level even after having been put to the wet and heated condition.

Fig. 1 in the attached drawing is a graph plotting a relationship between the days that have passed and an increase (%) in the amount of oxygen in the container when a bottle having a multi-layer structure of propylene/gas barrier layer (20 to 25 $\mu$m thick)/polypropylene is boiled and is, then, aged at 30° C (100%RH inside the bottle and 80%RH outside the bottle).

The above result tells that in the bottle using the ethylene/vinyl alcohol copolymer as the gas barrier layer, the oxygen concentration sharply increases right after the boiling and, further, continues to increase with the passage of time. In the bottle forming the fine dispersion structure and the multi-layer profile structure by blending the ethylene/vinyl alcohol copolymer with a transition metal catalyst and an oxidizable organic component, on the other hand, an increase in the oxygen concentration right after the boiling is suppressed and a subsequent increase in the oxygen concentration with the passage of time is suppressed, too, manifesting unexpected action and effect of the present invention.

In the dispersion structure in which the gas barrier thermoplastic resin is existing as a continuos phase (matrix) and the oxidizable organic component is existing as a dispersion phase, in particular, the surface areas of the oxidizable organic component which is the dispersion phase is increasing, whereby oxygen is efficiently absorbed. Even after the oxidation of the dispersion layer has proceeded, the gas barrier thermoplastic resin remains as a continuous phase offering an advantage of maintaining excellent gas shut-off property and mechanical strength. Further, since the oxidizadle organic component is covered with the continuous phase of gas barrier thermoplastic resin, there is obtained such an advantage of excellent hygienic property.

The dispersion and profile structures of the oxidizabde organic component in the gas barrier layer can be quantitatively treated by finding an average particle diameter of dispersed particles by the area method in cross section of the plane of the gas barrier method and by finding the area ratio occupied by the dispersed particles in cross section of the plane of the barrier layer.

Referring to Fig. 5, the cross section of the plane of the barrier layer according to the present invention may be either a cross section (direction of arrow A) in a direction perpendicular to the direction of height thereof or a cross section (direction of arrow B) in a direction in parallel therewith provided the multi-layer structure is a barrel portion of a container of the shape of bottle.

When the multi-layer structure is a sheet or a film, the cross section may be either the one in a direction perpendicular to the direction of winding or the one in parallel therewith.

When the gas barrier layer is stretched, the diameters of the dispersed particles and the area occupied by the dispersed particle differ depending upon a direction in parallel with the direction of stretch or a direction perpendicular thereto. According to the present invention, however, excellent barrier property and mechanical strength are maintained if the average diameter of the dispersed particles of the oxidizable polymer is not larger than 1 $\mu$m in either one cross section which is in parallel with the direction of stretch or is perpendicular thereto and if the area ratio occupied by the dispersed particles is not smaller than 1% in cross section of the plane of the gas barrier layer.

The oxidizable organic component contained as a dispersion phase in the gas barrier layer can be dyed by using a dye capable of selectively dying the oxidizable organic component only in cross section of the gas barrier layer.

The cross section of the gas barrier layer after dyed is photographed by using a scanning-type electron microscope (SEM), the picture of the SEM photograph is read by a scanner, the oxidizing organic component and other portions are discriminated from one another on a PC screen by using a picture processing software, thereby to measure the number n of dispersed particles and the area S of the dispersed oxidizable organic component particles present on a predetermined area $S_o$. This operation is conducted for a plurality of visual fields to enhance the precision, $\Sigma S$ and $\Sigma n$ are calculated from S and n found from the visual fields, and an area average particle diameter d is found from the following formula (1),

$$d = (\Sigma S / \Sigma n)^{1/2} \quad --- \quad (1)$$

Further, in compliance with the following formula (2), an area ratio $\alpha$ occupied by the dispersed particles is found from the above $S_o$ and S that have been found for the plurality of visual fields,

$$\alpha = 100 \times \Sigma S / \Sigma S_o \quad --- \quad (2)$$

Fig. 2 in the accompanying drawing is a scanning-type electron microphotograph of a gas barrier layer having dispersion and profile structures in planar cross section according to the present invention, the continuous phase being an ethylene/vinyl alcohol copolymer and the dispersion phase being a maleic anhydride-modified polybutadiene.

Fig. 3 is a scanning-type electron microphotograph of another gas barrier layer having dispersion and profile structures in planar cross section falling outside the scope of the present invention, the continuous phase being an ethylene/vinyl alcohol copolymer and the dispersion phase being a polybutadiene.

Fig. 4 is a scanning-type electron microphotograph of a further gas barrier layer having dispersion and profile structures in planar cross section falling outside the scope of the present invention, the continuous phase being an ethylene/vinyl alcohol copolymer and the dispersion phase being an OH-modified polyisoprene.

Referring to these scanning-type electron microphotograph, an unexpected fact becomes obvious in that the present invention is accomplishing dispersed particles of exceptionally fine sizes.

In the present invention, the average diameter of dispersed particles of the oxidizable organic component as found by an area method is selected to be not larger than 1 $\mu$m in cross section of the plane of the gas barrier layer, and an area ratio occupied by the dispersed particles is selected to be not smaller than 1% in cross section of the plane of the gas barrier layer, making it possible to suppress the oxygen permeation amount to a small value under high-temperature and wet conditions.

A multi-layer structure having the above dispersion and profile structures can be favorably molded, enables the molded structure to possess homogeneous texture and homogeneous appearance, featuring uniform thickness and excellent smoothness.

Further, since the oxidizable organic component is present in the dispersion structure, the crystallinity of the gas barrier resin itself and the intermolecular cohesive force are adversely affected little as compared to when the oxidizable organic component is existing in the form of molecules. Even after the oxidizable organic component has lost the activity, the gas barrier resin itself maintains barrier property.

Any known method can be used for controlling the dispersion structure, such as a method of finely dispersing the oxidizadle organic component by using a compatibility-imparting agent, or a method which imparts a particular functional group to the oxidizable organic material itself so that the oxidizable organic component is finely dispersed. In effect, the oxidizable organic component is controlled to possess the dispersion structure to exhibit excellent gas barrier property.

In the multi-layer structure of the present invention, when the direction of thickness of the gas barrier layer is regarded to be a short axis and a direction perpendicular to the direction of thickness is regarded to be a long axis in cross section of the plane of the gas barrier layer, maximum value of an aspect ratio of dispersed particles of the oxidizable organic component represented by the length in the long axis direction/length in the short axis direction, is selected to be not smaller than 2, in order to suppress the amount of oxygen permeation down to a lower level under high-temperature and wet conditions.

To measure the aspect ratio, the above-mentioned SEM photograph is enlarged, lines are drawn in the direction of thickness (short axis direction) of the gas barrier layer and in the direction (long axis direction) perpendicular thereto, the lengths of the dispersed particles are found in the long axis direction and in the short axis direction, the aspect ratio (length in the long axis direction/length in the short axis direction) is found, and a maximum aspect ratio of the dispersed particles is found.

It is desired that the oxidizable organic component used in the present invention contains a resin modified with a carboxylic acid or a carboxylic anhydride. The oxidizable organic component modified with the carboxylic acid or carboxylic anhydride can be finely and homogeneously dispersed in the gas barrier resin suppressing the amount of oxygen permeation down to a low value and improving the thickness and surface homogeneity of the multi-layer structure.

The acid value of the oxidizable organic component for obtaining good dispersion property tends to vary depending upon the number average molecular weight of the oxidizable organic component. As the number average molecular weight increases, there is obtained good dispersion with a small acid value. A preferred acid value may be adjusted depending upon the number average molecular weight and is, desirably, not smaller than 5 KOHmg/g.

[Gas Barrier Thermoplastic Resin]

The present invention uses a thermoplastic resin having an oxygen permeation coefficient at 20° C and 0%RH of not larger than 7.5 x $10^{-16}$ cm$^3$.cm/cm$^2$/sec/Pa ($10^{-12}$ cc · cm/cm$^2$/sec/cmHg) as a base resin of the gas barrier layer.

In the present invention, it is desired to use an ethylene/vinyl alcohol copolymer as a resin having particularly excellent barrier property against oxygen and flavor component. The ethylene/vinyl alcohol copolymer may be any known one such as a saponified copolymer obtained by saponifying an ethylene/vinyl acetate copolymer containing ethylene in an amount of from 20 to 60 mol% and, particularly, from 25 to 50 mol% such that the degree of saponification is not smaller than 96 mol% and, particularly, not smaller than 99 mol%.

The saponified ethylene/vinyl alcohol copolymer should have a molecular weight large enough for forming a film, and desirably has a viscosity of, generally, not smaller than 0.01 dL/g and, particularly, not smaller than 0.05 dL/g in a mixed solvent of phenol and water at a weigh ratio of 85 to 15 at 30° C.

[Oxidizable Organic Component]

In the present invention, the gas barrier resin is blended with a transition metal catalyst and an oxidizable organic component.

It is desired that the oxidizable organic component has active carbon atoms so as to easily pull out hydrogen. Though there is no particular limitation, the active carbon atoms may be those carbon atoms neighboring the carbon-carbon double bond, tertiary carbon atoms coupled to a chain on the carbon side or an active methylene groups.

As the oxidizable organic component, it is desired to use a polyene-type polymer. As the polyene used for the polyene-type polymer, there can be used a polyene having 4 to 20 carbon atoms, an oligomer or a polymer containing a unit derived from a chained or cyclic conjugated or non-conjugated polyene.

As the monomers, there can be exemplified conjugated dienes such as butadiene and isoprene; chained non-conjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene and 7-methyl-1,6-octadiene; cyclic non-conjugated dienes such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene and dicyclopentadiene; and triene and chloroprene such as 2,3-diisopropylidene-5-norbornene, 2-ethylidene-3-isopropylidene-5-norbornene, 2-propenyl-2 and 2-norbornadiene.

These polyenes can be used in a single kind or in a combination of two or more kinds, or can be used in the form of a homopolymer, random copolymer or a block copolymer in combination with other monomers.

As the monomer used in combination with the polyene, there can be exemplified $\alpha$-olefins having 2 to 20 carbon atoms, such as ethylene, propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene, and 12-ethyl-1-tetradecene. There can be further used such monomers as styrene, vinyltoluene, acrylonitrile, methacrylonitrile, vinyl acetate, methyl methacrylate and ethyl acrylate.

Concrete examples of the polyene-type polymer include polybutadiene (BR), polyisoprene (IR), butyl rubber (IIR), natural rubber, nitrile-butadiene rubber (NBR), styrene-butadiene rubber (SBR), styrene-isoprene rubber (SIR), chloroprene rubber (CR) and ethylenepropylene-diene rubber (EPDM) to which only, however, the polyene-type polymer is in no way limited.

The carbon-carbon double bond in the polymer may be present on the main chain in the form of a vinylene group or may be present on the side chain in the form of a vinyl group without any particular limitation. In effect, the carbon-carbon double bond may be the one capable of being oxidized. The one in the form of the vinyl group is desirable from the standpoint of high rate of oxidation.

It is desired that the oxidizable organic component used in the present invention has a functional group. As the functional group, there can be exemplified carboxylic acid group, carboxylic anhydride group, carboxylic acid ester group, carboxylic acid amide group, epoxy group, hydroxyl group, amino group and carbonyl group. Among them, carboxylic acid group and carboxylic anhydride group are particularly desired from the standpoint of compatibility. These functional groups may be present on the side chains or at the terminals of the resin.

When the oxidizable organic component is a polyene-type polymer, an ethylenically unsaturated monomer having the above functional group is used as a monomer for introducing the functional groups.

As the monomer used for introducing the carboxylic acid group or carboxylic anhydride group into the polyene-type polymer, there is desirably used an unsaturated carboxylic acid or a derivative thereof. Concretely, there can be exemplified $\alpha,\beta$-unsaturated carboxylic acids such as acrylic acid, methacrylic acid, maleic acid, fumaric acid, itaconic acid, citraconic acid and tetrahydrophthalic acid; unsaturated carboxylic acids such as bicyclo[2,2,1]hepto-2-ene-5,6-dicarboxylic acid; $\alpha,\beta$-unsaturated carboxylic anhydrides such as maleic anhydride, itaconic anhydride, citraconic anhydride and tetrahydrophthalic anhydride; and anhydrides of unsaturated carboxylic acid, such as bicyclo[2,21]hepto-2-ene-5,6-dicarboxylic anhydride.

The polyene-type polymer modified with acid is prepared by graft-copolymerizing the polyene-type polymer which is a base polymer with an unsaturated carboxylic acid or a derivative thereof by known means. The polyene-type polymer modified with acid, however, can further be prepared by random-copolymerizing the polyene-type polymer with an unsaturated carboxylic acid or a derivative thereof.

The oxidizable organic component having the carboxylic acid or the carboxylic anhydride group disperses well in the ethylene/vinyl alcohol copolymer, and smoothly absorbs oxygen.

The oxidizable organic component used in the present invention is the one obtained by modifying the polyene-type polymer with the carboxylic acid or the carboxylic anhydride. The oxidizable organic component, in the state of a liquid resin being modified with acid or acid anhydride is desirable from the standpoint of dispersion in the gas barrier resin.

It is desired that the oxidizable organic component used in the present invention is capable of absorbing oxygen in an amount of not smaller than $2 \times 10^{-3}$ mol and, particularly, not smaller than $4 \times 10^{-3}$ mol per gram of the oxidizing organic component at normal temperature in the presence of a transition metal catalyst. When the oxygen absorbing ability is smaller than the above value, the gas barrier resin must be blended with the oxidizable organic component in large amounts to develop good oxygen barrier property. As a result, the resin composition after blended exhibits deteriorated workability and formability.

[Transition Metal Catalyst]

Preferred examples of the transition metal catalyst used in the present invention include metal components of the Group VIII of periodic table, such as iron, cobalt, nickel and the like. There can be further exemplified metals of the Group I, such as copper, silver and the like; metals of the Group IV, such as tin, titanium, zirconium and the like; metals of the Group V, such as vanadium; metals of the Group VI, such as chromium; and metals of the Group VII, such as manganese. Among these metal components, cobalt exhibits a large oxygen absorbing rate and is particularly suited for the object of the present invention.

The transition metal catalyst is usually used in the form of an inorganic salt, an organic salt or a complex of the above transition metal having a low valency.

As the inorganic salt, there can be exemplified halide such as chloride, oxyacid salt of sulfur such as sulfate, oxyacid salt of nitrogen such as nitrate, phosphorus oxyacid salt such as phosphate, and silicate.

As the organic salt, on the other hand, there can be exemplified carboxylate, sulfonate, and phosphonate. Among them, carboxylate is suited for the object of the present invention. Its concrete examples include transition metal salts of acetic acid, propionic acid, isopropionic acid, butanoic acid, isobutanoic acid, pentanoic acid, isopentanoic acid, hexanoic acid, heptanoic acid, isoheptanoic acid, octanoic acid, 2-ethylhexanoic acid, nonanoic acid, 3,5,5-trimethylhexanoic acid, decanoic aid, neodecanoic acid, undecanoic acid, lauric acid, myristic acid, palmitic acid, margaric acid, stearic acid, arachic acid, linderic acid, tsuzuic acid, petroselinic acid, oleic acid, linoleic acid, linolenic acid, arachidonic acid, formic acid, oxalic acid, sulfamic acid and naphthanic acid.

As the complex of a transition metal, there is used a complex with β-diketone or β-keto-acid ester. As the β-diketone or β-keto-acid ester, there can be used, for example, acetylacetone, ethyl acetoacetate, 1,3-cyclohexadion, methylenebis-1,3-cyclohexadion, 2-benzyl-1,3-cyclohexadion, acetyltetralone, palmitoyltetralone, stearoyltetralone, benzoyltetralone, 2-acetylcyclohexanone, 2-benzoylcyclohexanone, 2-acetyl-1,3-cyclohexanedion, benzoyl-p-chlorobenzoylmethane, bis(4-methylbenzoyl)methane, bis(2-hydroxybenzoyl)methane, benzoylacetone, tribenzoylmethane, diacetylbenzoylmethane, stearoylbenzoylmethane, palmitoylbenzoylmethane, lauroylbenzoylmethane, dibenzoylmethane, bis(4-chlorobenzoyl)methane, bis(methylene-3,4-dioxybenzoyl)methane, benzoylacetylphenylmethane, stearoyl(4-methoxybenzoyl)methane, butanoylacetone, distearoylmethane, acetylacetone, stearoylacetone, bis(cyclohexnoyl)methane and dipivaroylmethane.

[Resin Composition]

In the present invention, it is desired that the ethylene/vinyl alcohol copolymer is blended with the oxidizable organic component in such an amount that the area ratio occupied by the dispersed particles is not smaller than 1% and, particularly, not smaller than 2% in the planar cross section of the gas barrier layer (in the direction of thickness). There is no particular limitation on the area ratio provided the gas barrier layer has a structure in which the gas barrier resin is forming a continuous layer and the oxidizable organic component is forming a dispersion layer. From the standpoint of stability of the dispersion structure, however, it is desired that the upper limit of the area ratio is not larger than 30% and, particularly, not larger than 20%.

In this case, further, it is desired that the amount of blending the oxidizable organic component in the resin composition is not larger than 30% by weight and, particularly, not larger than 20% by weight from the standpoint of workability and formability of the resin composition.

In this resin composition, further, it is desired that the transition metal catalyst is contained in an amount of from 100 to 1000 ppm and, particularly, from 200 to 500 ppm calculated as a transition metal amount per the total amount of the gas barrier resin and the oxidizable organic component.

When the area ratio of the oxidizable organic component is smaller than the above-mentioned range, the oxygen barrier property becomes insufficient as compared to when the area ratio is within the above range.

When the amount of the transition metal catalyst is smaller than the above-mentioned range, further, the gas barrier property tends to decrease as compared to when the amount lies within the above range. When this amount exceeds the above range, the resin composition tends to be deteriorated when it is formed by being kneaded, which is not desirable.

The ethylene/vinyl alcohol copolymer can be blended with the transition metal catalyst and with the oxidizable organic component by a variety of means. There is no particular order for the blending; i.e., the blending can be effected in any order.

In order to homogeneously blend the above components and to prevent undesired oxidation of before the use as much as possible, however, it is generally desired that the transition metal catalyst is dissolved in an organic solvent, the solvent is mixed with a base resin such as a powdery or granular ethylene/vinyl alcohol copolymer and, as required, the mixture is dried in an inert atmosphere, since the amount of the transition metal catalyst is smaller than that of the base resin such as the ethylene/vinyl alcohol copolymer.

It is, on the other hand, desired that the base resin such as the ethylene/vinyl alcohol copolymer carrying the above transition metal catalyst is melt-blended with the oxidizable organic component. This helps prevent a side reaction or a pre-reaction of the transition metal catalyst with the oxidizable organic component.

As the solvent for dissolving the transition metal catalyst, there can be used alcohol solvents such as methanol, ethanol and butanol; ether solvents such as dimethyl ether, diethyl ether, methyl ethyl ether, tetrahydrofuran and dioxane; ketone solvents such as methyl ethyl ketone and cyclohexanone; and hydrocarbon solvents such as n-hexane and cyclohexane. Usually, the solvent is used in such an amount that the concentration of the transition metal catalyst is from 5 to 90% by weight.

It is desired that the ethylene/vinyl alcohol copolymer which is the base resin, oxidizable organic component and the transition metal catalyst are mixed and are, then, preserved in a non-oxidizing atmosphere so will not to be oxidized during the stage preceding the composition. For this purpose, it is desired that the mixing and drying are conducted under a reduced pressure condition or in a nitrogen stream.

The mixing and/or the drying can be conducted in a stage preceding the step of formation by using a vent-type or dryer-equipped extruder or injector.

In the most preferred embodiment of the invention, the base resin such as the ethylene/vinyl alcohol copolymer smeared with the transition metal catalyst is melted and kneaded in advance by using a biaxial extrude having a side feed, and the oxidizable organic component is fed into the melt-kneaded mixture so as to homogeneously knead them together.

The kneading system using the biaxial extruder is capable of effecting the kneading at a low temperature and under a low pressure, making it possible to obtain a homogeneously kneaded product while preventing the occurrence of gel or the like.

The gas barrier layer used in the present invention can, as desired, be blended with a known activating agent though it is not usually needed. Though not limited thereto only, suitable examples of the activating agent include polyethylene glycol, polypropylene glycol, ethylene/methacrylic acid copolymer, and polymers containing hydroxyl groups such as various ionomers and/or carboxyl groups.

The hydroxyl group-containing and/or carboxyl group-containing polymers can be blended in an amount of not larger than 30 parts by weight and, particularly, from 0.01 to 10 parts by weight per 100 parts by weight of the ethylene/ vinyl alcohol copolymer.

The oxygen-absorbing layer used in the present invention can be blended with known blending agents, such as filler, coloring agent, heat-resisting stabilizer, anti-aging stabilizer, anti-oxidant, anti-aging agent, photo stabilizer, ultraviolet ray absorber, antistatic agent, metal soap, lubricant such as wax, reforming resin and rubber according to known recipe.

Upon blending the lubricant, for example, the resin is more favorably picked up by the screw. The lubricant may be a metal soap such as magnesium stearate or calcium stearate; the one of the hydrocarbon type, such as fluidized, natural or synthetic paraffin, microwax, polyethylene wax or chlorinated polyethylene wax; the one of the fatty acid type, such as stearic acid or lauric acid; the one of the type of fatty acid monoamide or bisamide, such as stearic acid amide, palmitic acid amide, oleic acid amide, erucic acid amide, methylenebisstearo amide, or ethylenebisstearo amide; the one of the ester type, such as butyl stearate, cured castor oil or ethylene glycol monostearate; or a mixed system thereof. A suitable amount of addition of the lubricant is from 50 to 1000 ppm based on the thermoplastic resin.

After melt-blended, the resin composition of the present invention is such that the ethylene/vinyl alcohol copolymer which is the base resin is forming a continuous phase (matrix) and the oxidizable organic component is forming a dispersion phase.

[Multi-Layer Structure]

In the present invention, at least one layer of the gas barrier member is combined, as required, with at least one layer of other resin to obtain a plastic multi-layer structure such as cup, tray, bottle, tubular container or pouch.

In general, it is desired that the gas barrier layer is formed on the inside of the container rather than on the outer surface so will not to be exposed to the outer surface. It is further desired that the gas barrier layer is formed on the outer side of the inner surface of the container so will not to come into direct touch with the content. It is thus desired to provide the gas barrier layer as at least one intermediate layer of the multi-layer resin container.

In the case of a container of the multi-layer constitution, the other resin layer to be used in combination with

8

the gas barrier layer may be a moisture-resistant resin such as olefin resin or thermoplastic polyester resin, or any other gas barrier resin.

As the olefin resin, there can be exemplified polyethylenes (PE) such as low density polyethylene (LDPE), middle density polyethylene (MDPE), high density polyethylene (HDPE), linear low density polyethylene (LLDPE) and linear very low density polyethylene (LVLDPE), as well as polypropylene (PP), ethylene/propylene copolymer, polybutene-1, ethylene/butene-1 copolymer, propylene/butene-1 copolymer, ethylene/propylene/butene-1 copolymer, ethylene/vinyl acetate copolymer and ionically crosslinked olefin copolymer (ionomer) or a blend thereof.

As the thermoplastic polyester resin, there can be exemplified a polyester resin comprising chiefly polyethylene terephthalate (PET), polybutylene terephthalate (PBT), polyethylene naphthalate (PEN), polyester resin comprising chiefly a polyglycolic acid, or a copolymerized polyester thereof, or a blend thereof.

As other examples of the barrier resin, there can be used cyclic olefin-type copolymer (COC) and, particularly, a copolymer of ethylene and cyclic olefin and, more particularly, APEL of Mitsui Chemical Co.

Described below are suitable examples of the container laminated-layer structure where OBR stands for a layer of the oxygen barrier resin composition (hereinafter simply referred to as oxygen barrier layer). Which layer be formed on the inner surface side is freely selected depending upon the object.

Three-layer structure: PE/OBR/PET, PET/OBR/PET, PE/OBR/PP, EVOH/OBR/PET, PE/OBR/COC.

Four-layer structure: PE/PET/OBR/PET, PE/OBR/EVOH/PET, PET/OBR/EVOH/PET, PE/OBR/EVOH/COC.

Five-layer structure: PET/OBR/PET/OBR/PET, PE/PET/OBR/EVOH/PET, PET/OBR/EVOH/COC/PET PET/OBR/PET/COC/PET, PE/OBR/EVOH/COC/PET.

Six-layer structure: PET/OBR/PET/OBR/EVOH/PET, PE/PET/OBR/COC/EVOH/PET, PET/OBR/ EVOH/PET/COC/PET

Seven-layer structure:PET/OBR/COC/PET/EVOH/OBR/PET.

In producing the above laminates, an adhesive resin may, as required, be interposed among the resin layers.

As the adhesive resin, there can be exemplified a thermoplastic resin containing carbonyl (-CO-) groups based upon carboxylic acid, carboxylic anhydride, carboxylate, carboxylic acid amide or carboxylic acid ester at a concentration of 1 to 700 milliequivalent (meq)/100 g of resin and, particularly, at a concentration of 10 to 500 meq/100 g of the resin on the main chain or on the side chains. Preferred examples of the adhesive resin include ethylene/acrylic acid copolymer, ionically crosslinked olefin copolymer, maleic anhydride-grafted polyethylene, maleic anhydride-grafted polypropylene, acrylic acid-grafted polyolefin, ethylene/vinyl acetate copolymer, copolymerized polyester and copolymerized thermoplastic resin, which may be used in one kind or in a combination of two or more kinds. These resins can be effectively laminated by the simultaneous extrusion or by the sandwich lamination.

Further, a thermosetting adhesive resin of the isocyanate type or the epoxy type can be used as the adhesive layer for adhering the gas barrier resin film that has been formed in advance to the moisture-resistant resin film.

In the multi-layer structure of the present invention, though there is no particular limitation, it is desired that the thickness of the gas barrier layer generally lies in a range of from 3 to 100 $\mu$m and, particularly, from 5 to 50 $\mu$m. That is, when the thickness of the gas barrier layer becomes smaller than a given range, the gas barrier performance becomes poor. Even when the thickness becomes larger than the given range, on the other hand, there is obtained no particularly distinguished advantage in regard to the gas barrier property but rather disadvantage results concerning the economy such as an increase in the amount of resin and a decrease in the flexibility and softness of the material.

In the multi-layer structure of the present invention, it is desired that the entire thickness is generally from 30 to 7000 $\mu$m and, particularly, from 50 to 5000 $\mu$m though it may vary depending upon the use. It is, on the other hand, desired that the oxygen barrier intermediate layer has a thickness which is from 0.5 to 95% and, particularly, from 1 to 50% of the entire thickness.

The multi-layer container of the present invention is useful for preventing a drop of flavor of the content caused by oxygen.

The contents that can be contained may be such beverages as beer, wine, fruit juices, carbonated soft drinks, etc., such foods as fruits, nuts, vegetables, meet products, infant's foods, coffee, jam, mayonnaise, ketchup, edible oil, dressing, sauces, food boiled down in soy, milk products, etc., as well as medicines, cosmetics, gasoline, etc. that are subject to be deteriorated in the presence of oxygen, though the contents are in no way limited thereto only.

(EXAMPLES)

The present invention will now be described by way of Examples to which only, however, the invention is not limited.

[Measurement of Diameter of Dispersed Particles, Aspect Ratio of the Dispersed Particles and Area Ratio occupied by the Dispersed Particles]

A multi-layer structure cut from a multi-layer bottle, multi-layer cup or laminated film was buried in an epoxy/amine-type burying film for electron microscope, and the burying resin was cured. Then, the burying sample was polished by using a microtome (2050 SUPERCUT: Leica Co.) such that there appeared the planar cross section (in the direction of thickness) of the multi-layer structure (cross section in a direction perpendicular to the direction of height when the multi-layer structure was a barrel of a container of the shape of a bottle or a cup, or cross section in a direction perpendicular to the drawing direction when the multi-layer structure was a sheet or a film). Then, the burying sample was immersed in osmic acid a whole day to dye carbon-carbon double bond moiety of the polyene polymer. The burying sample after dyed was finish-polished by using an ultra-microtome (REIHERT URLTRACUTS: Leica Co.), and was observed by using a scanning-type electron microscope (JSM-6300F: Nihon Denshi Co.) at a magnification of 3,000 to 20,000 times to take an SEM photograph.

The picture of the SEM photograph was taken in by a scanner (GT-7600U: Seiko-Epson Co.). The polyene polymer moiety was distinguished from other portions on a PC screen by using a picture processing software to thereby measure an area S of dispersed particles of the polyene polymer present on a predetermined area $S_o$ and the number n of dispersed particles. The operation was conducted for a plurality of visual fields to improve the precision, $\Sigma S$ and $\Sigma n$ were calculated from S and n found from the visual fields, and an area average particle diameter d was found in compliance with the following formula (1),

$$d = (\Sigma S / \Sigma n)^{1/2} \qquad \text{---} \quad (1)$$

From $S_o$ and S found from the plurality of visual fields, further, an area ratio $\alpha$ occupied by the dispersed particles was found in compliance with the following formula,

$$\alpha = 100 \times \Sigma S / \Sigma S_o \qquad \text{---} \quad (2)$$

Further, the above SEM photograph was enlarged, lines were drawn in a direction of thickness (short axis direction) of the gas barrier layer and in a direction (long axis direction) perpendicular thereto to find a length of the dispersed particles in the long axis direction and a length thereof in the short axis direction, to find an aspect ratio (length in the long axis direction/length in the short axis direction), and to obtain a maximum aspect ratio of the dispersed particles.

[Measurement of Acid Value]

The sample was completely dissolved in a suitable solvent and was, then, titrated with an alcoholic 0.1N KOH solution to find the total acid value of the sample.

[Measurement of the Number Average Molecular Weight]

The sample was dissolved in chloroform and was measured for its number average molecular weight by using a gel permeation chromatography (column: TSK G5000HHR + 4000HHR: Toso Co.) to which was connected a detection system (TriSEC 302TDA detector: Asahi Techneion Co.) equipped with a light scattering detector, a refraction detector and a viscosity detector.

[Measurement of Oxygen Permeation Property of Multi-Layer Structure]

An oxygen permeability coefficient measuring apparatus (OX-TRAN 2/20: Modern Control Co.) was used. The following method was employed when the sample failed to possess the area of the transmission cell (circle of an area of 50 cm$^2$). A laminate obtained by sticking a biaxially stretched polyethylene terephthalate film of a thickness of 50 $\mu$m to an aluminum foil of a thickness of 50 $\mu$m was cut into a square of a side of 10 cm, and a hole of a diameter of 25 or 50 mm was perforated in the center. The polyethylene terephthalate film of this laminate was peeled up to the portion of the hole, and a sample to be measured was stuck with a sticking agent so as to close the hole. At this moment, attention was given to a sufficient degree so that no air bubble entered into between the sample to be measured and the sticking agent. Then, the polyethylene terephthalate film that was peeled was carefully placed thereon so that no air bubble was entrapped therein thereby to prepare a holder having the sample to be measured being fitted in the hole. The holder was mounted on the OX-TRAN, and the area of the sample to be measured was corrected thereby to find the amount of oxygen that has permeated through. The amount of oxygen that has permeated through was measured by flowing pure oxygen into the cell on one side and flowing a nitrogen gas (blended with 1% of a hydrogen gas) into another cell under a temperature-humidity condition of 30° C - 80%RH.

[Measurement of Oxygen Permeation Property of the Multi-Layer Container]

The interior of a vacuum gloved box was substituted with a nitrogen gas. Distilled water in an amount of 1 cc was introduced into the multi-layer container in the box, and the opening was heat-sealed with a closure member for olefin having an aluminum foil as a barrier member. The container was boiled in a retort oven under a hydrothermal isobaric condition at 85° C for 30 minutes and was, then, preserved in an atmosphere of 30° C - 80%RH. The amount of oxygen that has permeated through after one day has passed was measured by using a gas chromatography (GC-3BT: Shimazu Seisakusho Co., detector: TCD (60° C), column: Molecular Sieve 5A (100° C), carrier gas: argon).

[Example 1]

Ethylene/vinyl alcohol copolymer resin pellets (EP-F101B: Kurare Co.) copolymerized with 32 mol% of ethylene and a cobalt neodecanoate containing 14% by weight of cobalt (DICNATE 5000: Dainihon Ink Kagaku Kogyo Co.) were mixed together in a tumbler, so that the cobalt neodecanoate was homogeneously deposited in an amount of 350 ppm calculated as the amount of cobalt on the surfaces of the ethylene/vinyl alcohol copolymer resin pellets.
Next, by using a biaxial extruder (TEM-35B: Toshiba Kikai Co.) having a strand die mounted on the outlet portion thereof, a maleic anhydride-modified liquid polybutadiene (M-2000-20: Nihon Sekiyu Kagaku Co.) having a number average molecular weight of 5800 and an acid value of 40 KOHmg/g was added dropwise by using a liquid feeder in an amount of 30 parts by weight per 970 parts by weight of the ethylene/vinyl alcohol copolymer resin on which cobalt has been deposited while evacuating to a low degree at a screw rotational speed of 100 rpm. Then, the strands were drawn at a molding temperature of 200° C to prepare pellets. The pellets had been blended with the maleic anhydride-modified polybutadiene in an amount of 3% by weight.
By using the thus prepared pellets, a three-kind-five-layer parison (LDPE/adhesive/gas barrier layer/adhesive/LDPE) was extruded under the conditions of a shell diameter of 15 mm and a core diameter of 13 mm to prepare a wide-mouth multi-layer bottle of the shape of a jar having a mouth diameter of 44 mm and a volume of 125 cc by the direct blowing method. The resins of the multi-layer bottle were so selected as to possess a weight ratio of LDPE of 92% by weight, adhesive of 4% by weight and gas barrier layer of 4% by weight. The thinnest portion of the multi-layer bottle possessed a thickness of 0.7 mm. The multi-layer structure obtained by cutting the thinnest portion was measured for the diameter of the polyene polymer dispersed particles in the planar section of the gas barrier layer (in the direction of thickness) to find an area average particle diameter of 0.30 μm and an area ratio occupied by the dispersed particles of 3.5%. The amount of oxygen that has permeated through the multi-layer structure was 0.2 cc/m$^2$/day/atom manifesting excellent barrier property.
Further, the multi-layer bottle was boiled, and the amount of oxygen permeation one day after the boiling was measured. As a result, the amount of oxygen that has permeated was 0.02 cc per a bottle. Thus, the multi-layer structure of the invention exhibited excellent gas barrier property even after it was subjected to a severe processing such as boiling.

[Example 2]

Pellets were prepared in the same manner as in Example 1 with the exception of adding the maleic anhydride-modified liquid polybutadiene dropwise in an amount of 50 parts by weight per 950 parts by weight of the ethylene/vinyl alcohol copolymer resin to which cobalt has been deposited. The pellets had been blended with the maleic anhydride-modified polybutadiene in an amount of 5% by weight.
By using the thus prepared pellets, a three-kind-five-layer parison (PP/adhesive/gas barrier layer/adhesive/PP) was extruded under the conditions of a shell diameter of 15 mm and a core diameter of 13 mm to prepare a wide-mouth multi-layer bottle of the shape of a jar having a mouth diameter of 44 mm and a volume of 125 cc by the direct blowing method. The resins of the multi-layer bottle were so selected as to possess a weight ratio of PP of 92% by weight, adhesive of 4% by weight and gas barrier layer of 4% by weight. The thinnest portion of the multi-layer bottle possessed a thickness of 0.7 mm. The multi-layer structure obtained by cutting the thinnest portion was measured for the diameter of the polyene polymer dispersed particles in the planar cross section of the gas barrier layer (in the direction of thickness) to find an area average particle diameter of 0.28 μm and an area ratio occupied by the dispersed particles of 4.9%. The amount of oxygen that has permeated through the multi-layer structure was 0.1 cc/m$^2$/day/atom manifesting excellent barrier property.

Further, the multi-layer bottle was boiled, and the amount of oxygen permeation one day after the boiling was measured. As a result, the amount of oxygen that has permeated was 0.015 cc per a bottle. Thus, the multi-layer structure of the invention exhibited excellent gas barrier property even after it was subjected to a severe processing such as boiling.

[Comparative Example 1]

Multi-layer structures were prepared under the same conditions as Example 1 by using, as a gas barrier layer, an ethylene/vinyl alcohol copolymer resin containing neither the polyene polymer nor the transition metal catalyst, and the amounts of oxygen permeation were measured. As a result, the amounts of oxygen that has permeated through the multi-layer structures obtained from a multi-layer bottle were 4.1 cc/m$^2$/day/atm.
Thus, the barrier properties were inferior by more than 10 times to those of the multi-layer structures having a gas barrier layer blended with the polyene polymers of Example 1.

[Comparative Example 2]

A multi-layer bottle was prepared under the same conditions as those of Example 2 by using, as a gas barrier layer, an ethylene/vinyl alcohol copolymer resin containing neither the polyene polymer nor the transition metal catalyst, and a multi-layer structure was obtained in the same manner as in Example 2. The amount of oxygen that has permeated through the multi-layer structure was 4.0 cc/m$^2$/day/atm. Thus, the barrier property was inferior by more than 10 times to that of the multi-layer structure of Example 2.
Further, the multi-layer bottle was boiled, and the amount of oxygen permeation one day after the boiling was measured. As a result, the amount of oxygen that has permeated was 0.26 cc per a bottle. Thus, the oxygen barrier property under the wet heated condition was very inferior to that of the multi-layer bottle of Example 2.

[Comparative Example 3]

A multi-layer bottle was prepared in the same manner as in Example 1 with the exception of blending 993 parts by weight of the ethylene/vinyl alcohol copolymer resin with 7 parts by weight of a maleic anhydride-modified liquid polybutadiene (M-2000-20: Nihon Sekiyu Kagaku Co.). A multi-layer structure was obtained by cutting out the thinnest portion of the multi-layer bottle in the same manner as in Example 1 and was measured for the diameter of the polyene polymer dispersed particles in the planar cross section of the gas barrier layer (in the direction of thickness) to find an area average particle diameter of 0.29 $\mu$m and an area ratio occupied by the dispersed particles of 0.7%. The amount of oxygen that has permeated through the multi-layer structure was 2.3 cc/m$^2$/day/atm manifesting poor barrier property.

[Comparative Example 4]

A multi-layer bottle was prepared in the same manner as in Example 1 with the exception of using a polybutadiene (B-2000: Nihon Sekiyu Kagaku Co.) instead of using the maleic anhydride-modified liquid polybutadiene. The obtained multi-layer bottle exhibited very rough skin due to defective molding of the gas barrier layer, and exhibited very poor appearance.
A multi-layer structure was obtained by cutting out the thinnest portion of the multi-layer bottle in the same manner as in Example 1 and was measured for the diameter of the polyene polymer dispersed particles in the planar cross section of the gas barrier layer in the direction of thickness) to find an area average particle diameter of 1.5 $\mu$m and an area ratio occupied by the dispersed particles of 1.5%.

[Comparative Example 5]

A multi-layer bottle was prepared in the same manner as in Example 1 with the exception of using a terminal hydroxyl group-modified polyioprene (Poly ip: Idemitsu Sekiyu Kagaku Co.) instead of using the maleic anhydride-modified liquid polybutadiene. In this case, too, the bottle exhibited very rough skin and a very poor appearance like in Comparative Example 4. A multi-layer structure was obtained by cutting out the thinnest portion of the multi-layer bottle in the same manner as in Example 1 and was measured for the diameter of the polyene polymer dispersed particles in the planar cross section of the gas barrier layer (in the direction of thickness) to find an area average particle diameter of 2.3 $\mu$m and an area ratio occupied by the dispersed particles of 1.8%.
The above results are summarized in Table 1.

Table 1

| Ex. & Comp. | Oxidizable organic component | | | | Molded article | Area |
|---|---|---|---|---|---|---|
| | Kind | Average acid value (KOHmg/g) | Ex. Number average molecular weight | Blending amount (wt %) | | average particle size ($\mu$m) |
| Ex.1 | maleic anhydride-modified polybutadiene | 40 | 5800 | 3 | multi-layer bottle | 0.30 |
| Ex.2 | ditto | 40 | 5800 | 5 | multi-layer bottle | 0.28 |
| Comp. Ex. 1 | --- | -- | -- | - | multi-layer bottle multi | -- |
| Comp. Ex. 2 | --- | -- | -- | - | multi-layer bottle | -- |
| Comp. Ex. 3 | maleic anhydride-modified polybutadiene | 40 | 5800 | 0.7 | multi-layer bottle | 0.29 |
| Comp.Ex. 4 | polybutadinene | -- | could not be measured | 3 | multi-layer bottle | 1.5 |
| Comp. Ex. 5 terminal | OH-modified Polyisoprene | -- | could not be measured | 3 | multi-layer bottle | 2.3 |
| Ex.1 | 3.5 | | could not be measured | 0.2 | 0.02 | good barrer prepay |
| Ex.2 | 4.9 | | could not be measured | 0.1 | 0.015 | ditto |
| Comp.Ex.1 | -- | | --- | 4.0 | could not be measured 0.26 | permeation is or more times as great as Ex.1. permeation is 10 or more times as Ex.2. |
| Comp.Ex.2 | -- | | --- | 4.0 | 0.26 | $O_2$ permeation is 10 or more times as great as Ex.2. |
| Comp.Ex.3 | 0.7 | | could not be measured | 2.3 | could not be measured | great as $O_2$ permeation is 10 or more times as great as Ex.1. |
| Comp.Ex.4 | 1.5 | | could not be measured | could not be measured | could not be measured | Dispersed particles are so coarse that molded bottle exhibits roush skin and |
| Comp.Ex.5 | 1.8 | | could not be measured | could not be measured | could not be measured | poor appearance ditto |

According to the present invention, a gas barrier layer is formed by blending a particular gas barrier resin with a transition metal catalyst and an oxidizable organic component, and the dispersion structure and the profile structure of the oxidizable organic component are controlled to lie within particular ranges in the planar cross section of the gas barrier layer (in the direction of thickness hereof). Then, it is allowed to markedly improve the oxygen permeation coefficient of the multi-layer structure under the wet heated condition while maintaining excellent workability and mechanical strength.

**Claims**

1.    A multi-layer structure obtained by a direct blowing method having a gas barrier intermediate layer with excellent gas barrier property, said gas barrier intermediate layer comprising a resin composition obtained by blending an ethylene/vinyl alcohol copolymer having an oxygen permeation coefficient at 20°C and 0%RH of not larger than $7.5 \times 10^{-16}$ cm$^3$.cm/cm$^2$/sec/Pa ($10^{-12}$ cc. cm/cm$^2$/sec/cmHg) with a transition metal catalyst and an oxidizable organic component, said oxidizable organic component having an average diameter of dispersed particles of not larger than 1 $\mu$m as found by an area method in cross section of the plane of said gas barrier layer, and an area ratio occupied by the dispersed particles being not smaller than 1% in cross section of the plane of said gas barrier

2.    A multi-layer structure according to claim 1 wherein said oxidizable organic component is a polyene polymer.

3.    A multi-layer structure according to Claim 1 or Claim 2 wherein said oxidizable organic component is a resin having a carboxylic acid group or a carboxylic anhydride group.

**Patentansprüche**

1.    Mehrschichtstruktur, die mit einem Direktblasverfahren gewonnen wird und eine Gassperr-Zwischenschicht mit ausgezeichneter Gassperreigenschaft aufweist, wobei die Gassperr-Zwischenschicht eine Harzzusammensetzung umfasst, die durch Mischen eines Ethylen/Vinylalkohol-Copolymers mit einem Sauerstoffdurchdringungskoeffizienten bei 20 °C und 0 % relativer Luftfeuchte von nicht mehr als $7.5 \times 10^{-16}$ cm$^3$.cm/cm$^2$/sec/Pa ($10^{-12}$ cc.cm/cm$^2$/sec/cmHg), mit einem Übergangsmetallkatalysator und einer oxidierbaren organischen Komponente gewonnen wird, wobei die oxidierbare organischen Komponente einen durchschnittlichen Durchmesser dispergierter Partikel von nicht größer als 1 $\mu$m, ermittelt mit einem Flächenverfahren im Querschnitt der Ebene der Gassperrschicht, und ein Verhältnis der mit dispergierten Partikeln eingenommen Fläche von nicht weniger als 1 % im Querschnitt der Ebene der Gassperrschicht aufweist.

2.    Mehrschichtstruktur gemäß Anspruch 1, wobei die oxidierbare organische Komponente ein Polyenpolymer ist.

3.    Mehrschichtstruktur gemäß Anspruch 1 oder Anspruch 2, wobei die oxidierbare organische Komponente ein Harz mit einer Carboxylsäuregruppe oder einer Carboxylanhydridgruppe ist.

**Revendications**

1.    Structure multicouche obtenue par un procédé de soufflage direct, ayant une couche intermédiaire barrière aux gaz affichant d'excellentes propriétés de barrière aux gaz, ladite couche intermédiaire barrière aux gaz comprenant une composition de résine obtenue en mélangeant un copolymère d'éthylène et d'alcool vinylique ayant un coefficient de perméation à l'oxygène à 20°C et sous une humidité relative de 0 % qui ne dépasse pas $7.5 \times 10^{-16}$ cm$^3$.cm/cm$^2$/s/Pa ($10^{-12}$ cm$^3$.cm/cm$^2$/s/cm Hg) à un catalyseur de métal de transition et à un composant organique oxydable, ledit composant organique oxydable ayant un diamètre moyen de particules dispersées qui ne dépasse pas 1 $\mu$m comme on le trouve par une méthode de surface en coupe transversale du plan de ladite couche barrière aux gaz, et par un rapport de surface occupé par les particules dispersées qui n'est pas inférieur à 1 % en coupe transversale du plan de ladite couche barrière aux gaz.

2.    Structure multicouche selon la revendication 1, dans laquelle ledit composant organique oxydable est un polymère de polyène.

3.    Structure multicouche selon la revendication 1 ou la revendication 2, dans laquelle ledit composant organique oxydable est une résine ayant un groupement acide carboxylique ou un groupement anhydride carboxylique.

# Fig. 1

O₂ SHUT − OFF PROPERTY OF MULTI − LAYER BOTTLES
AFTER BOILED BY USING, AS A GAS BARRIER LAYER,
AN ETHYLENE∕ALCOHOL COPOLYMER IN WHICH A MALEIC
ANHYDRIDE − MODIFIED POLYBUTADIENE IS DISPERSED

Fig. 2

TOMOGRAPHY OF A GAS BARRIER LAYER IN WHICH
A MALEIC ANHYDRIDE – MODIFIED POLYBUTADIENE IS
DISPERSED

Fig. 3

TOMOGRAPHY OF A GAS BARRIER LAYER IN WHICH
A POLYBUTADIENE IS DISPERSED

Fig. 4

TOMOGRAPHY OF A GAS BARRIER LAYER IN WHICH A HYDROXYL GROUP – MODIFIED POLYISOPRENE IS DISPERSED

Fig. 5

**EP 1 464 482 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62001824 B
- JP 1278344 A
- JP 2500846 B
- EP 1033080 A
- EP 1067154 A